# EUROPEAN PATENT APPLICATION

(11) **EP 2 775 592 A2**
(43) Date of publication of application: **10.09.2014**
(21) Application number: 14156925.1
(22) Date of filing: 27.02.2014
(51) Int. Cl.: H02K 3/28, H02P 9/30

(54) **Alternator for a power generation system**

(30) Priority: 08.03.2013 US 201313790194
(71) Applicant: Kohler Co., Kohler, Wisconsin 53044 (US)
(72) Inventor: Frampton, Isaac S., Strattanville, PA Pennsylvania 16258 (US); Van Maaren, Richard D., Sheboygan Falls, WI Wisconsin 53085 (US); Larson, Adam M., Mequon, WI Wisconsin 53092 (US)
(74) Representative: Hoefer & Partner

(57) **Abstract**

The present invention relates to an alternator (11) for a power generation system, the alternator comprising a stator (12) that includes a main output winding (13), a poly-phrase auxiliary winding (14), and an exciter field winding (not shown) powered by the poly-phase auxiliary winding, wherein the poly-phase auxiliary winding is magnetically decoupled from the main output winding, a rotor that includes an exciter secondary winding and a rotary field winding powered by the exciter secondary winding; and a regulator that measures a current to the exciter field winding and controls the current to a set point in order to regulate an output voltage produced by the main output winding of the stator.

## Description

### TECHNICAL FIELD

This disclosure generally pertains to a power generation system, and more particularly to an alternator for a power generation system.

### BACKGROUND

An alternator is an electromechanical device that converts mechanical energy to electrical energy in the form of alternating current. An alternator may include a stationary armature or stator, which may be or include a stationary set of conductors wound in coils (also referred to as "stator windings" or "conductive coils"). An alternator may also include a rotating armature or rotor, which may be positioned within the stator, or a stationary magnetic field. In some alternators, the stationary magnetic field may be generated by a permanent magnet. The rotating armature may be driven by, turned, or otherwise rotated by an internal combustion engine.

Alternators may generate or induce a voltage on conductive coil when the magnetic flux through the conductive coil changes. For example, the internal combustion engine may turn the rotor positioned within a stator. As the rotor turns within the stator, the magnetic flux through the stationary conductive coils in the stator may vary and generate an induced voltage.
The rotating magnetic field generated by the rotating rotor thus induces an AC voltage in the stator windings.

Some alternators may include three sets of stator windings that are physically offset. In these alternators, the rotating magnetic field that is created when the internal combustion engine drives the rotor produces a three-phase voltage.

In some alternators, the rotor's magnetic field may be produced by induction (as in a "brushless" alternator), by permanent magnets, by a rotor winding energized with direct current through slip rings and brushes, or in other ways.

In an alternator where the rotor's magnetic field is produced by induction, the field may be excited by voltage generated in the rotating secondary winding of an exciter. The secondary winding of the exciter may rotate within a stationary exciter field. The voltage generated in the rotating secondary winding may be controlled by the amplitude of the stationary exciter field. Some alternators may utilize a fixed stationary exciter field and control field current by switching the output of the exciter secondary winding to the rotor field winding producing a magnetic field in the rotor. Other alternators may control the energy in the rotor field winding by changing the stationary exciter field current.

In alternators where the rotors magnetic field is produced by permanent magnets, the rotating magnetic field may be generated by permanent magnets in the rotor, or generated by a rotor field winding that is excited by a permanent magnet exciter. Permanent magnet exciters may contain an exciter field produced by permanent magnets and an exciter secondary winding which provides a source of energy to excite the field. Field current may be controlled by switching the power output from the exciter secondary winding to the rotor field.

Some alternators may utilize a combination of permanent magnets and induction. For example, some alternators may utilize a permanent magnet exciter to provide energy to the exciter field. The exciter field may be controlled by switching on and off the voltage output of the permanent magnet exciter. Switching the output of the permanent magnet exciter may control the output voltage of the exciter secondary winding which is tied to the rotor field.

Some alternators may include an automatic voltage control device that controls the rotor field to keep the output voltage constant under varying loads. As an example, if the output voltage from the stationary alternator coils drops due to an increase in demand, the automatic voltage control device increases the voltage applied to rotor field winding such that more current is fed into the rotating field coils. This increase in current increases the magnetic field around the field coils which induces a greater voltage in the secondary winding coils. Thus, the output voltage may be brought back up to its original value.

There are different types of alternators. One type of alternator is a single-phase alternator where the peak voltage of all main output leads from the alternator occurs nearly simultaneously. Another type of alternator is a three-phase alternator where the peak voltage of each of the main output leads from the alternator occurs at or near 120 degrees of electrical rotation apart.

There may be at least three operating conditions for an alternator. The first operating condition may be a normal operation in which the output voltage may be regulated to a target. The second operating condition may be a large inductive load operation which may relate to motor starting in which there is a large inductive load applied to the output of the alternator. The third operating condition may be a short-circuit condition where one or more of the output leads of the alternator are short-circuited.

### BRIEF DESCRIPTION OF THE DRAWINGS

FIGS. 1-2 illustrate an example alternator for a power generation system.
FIG. 3 shows an example alternator that includes a two-phase auxiliary winding.
FIGS. 4-5 illustrate an example alternator for a power generation system.
FIG. 6 shows an example regulator that may be used to control the field excitation level of an alternator.
FIG. 7 shows an example regulator that may be used to control the field excitation level of an alternator.
FIGS. 8-9 illustrate an example alternator for a power generation system.
FIGS. 10A-10B illustrates an example form of a single three-phase auxiliary winding for an alternator in a corner open delta connection configuration.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

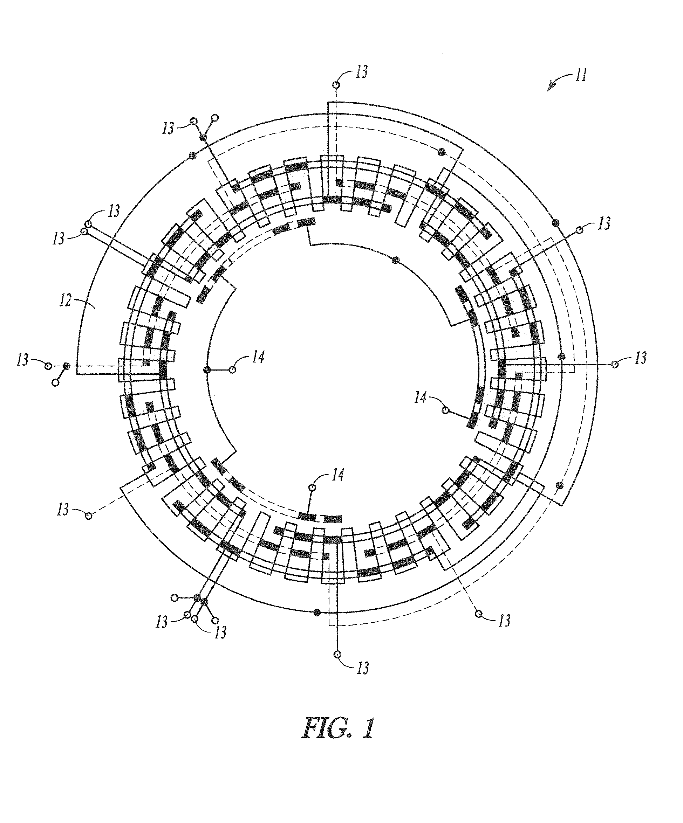

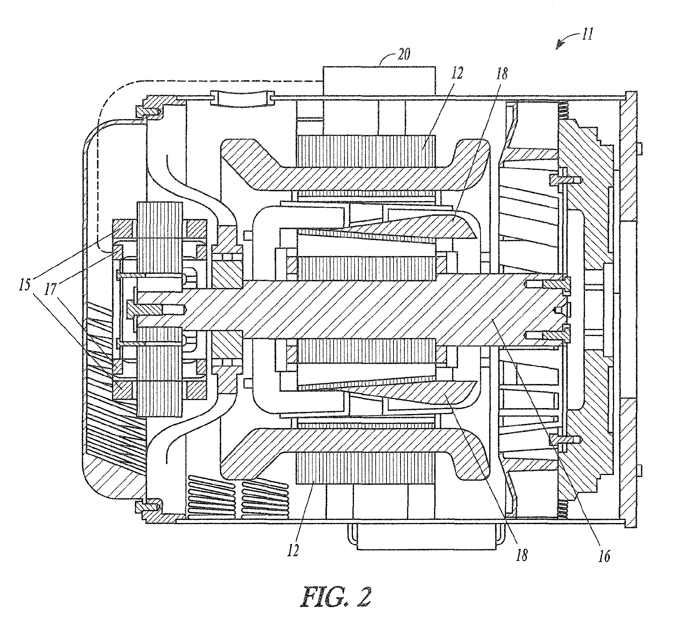

FIGS. 1-2 illustrate an example alternator 11 for a power generation system. The alternator 11 may include a stator 12. The stator 12 may include one or more of a main output winding 13, a poly-phase auxiliary winding 14, and an exciter field winding 15 that may be powered by the poly-phase auxiliary winding 14. Some systems may include more than one poly-phase auxiliary winding 14. The poly-phase auxiliary winding 14 may be configured to provide maximum amplitude of a harmonic voltage to the exciter field winding 15 (such as a third order, or higher order, harmonic voltage).

The alternator 11 may further include a rotor 16. The rotor 16 may include an exciter secondary winding 17, and a rotary field winding 18 that may be powered by the exciter secondary winding 17. The rotary field winding 18 current in some alternators 11 may be directly rectified from the exciter secondary winding 17 voltage by uncontrolled rectifiers. In this case, the voltage on the rotary field winding is proportional to the voltage generated by the exciter secondary winding 17. The rotary field winding 18 current in some alternators 11 may be rectified in a controlled manner from the exciter secondary winding 17 voltage by controlled rectifiers or switching devices such as SCRs, FETs IGBTs, BJTs (among others).

The alternator 11 may further include a regulator 20 that may control the power provided to the exciter field winding 15. As an example, the regulator 20 may be an automatic voltage regulator but other types of regulators are contemplated. The regulator 20 may control the power provided to the exciter field winding 15 to regulate an output voltage produced by the main output winding 13 of the stator 12.

In some power generation systems, the poly-phase auxiliary winding 14 of the alternator 11 may be positioned such that it is magnetically decoupled from the main output winding 13. Magnetic decoupling may decrease the effect of main winding current on auxiliary winding voltage. In some systems, magnetic decoupling may be possible such as on a single-phase alternator 11.

In some systems, the alternator 11 may operate in a short circuit condition. When operating a three-phase alternator 11 in the short circuit condition, the magnetic flux generated by the rotary field winding 18 may be canceled by magnetic flux that is generated by the current in the main output winding 13. The respective magnetic fluxes may partially or entirely cancel one another due to the phase shift caused by the primarily inductive main output winding 13. This cancellation condition may occur during operation of a three-phase alternator 11 in a short circuit condition.

When the respective magnetic fluxes cancel one another, the fundamental voltage generated on the auxiliary winding 14 may be significantly reduced. As an example, the fundamental voltage generated on the auxiliary winding 14 may be 5-10% of the normal operating voltage. This fundamental voltage reduction may decrease the ability of the alternator 11 to provide energy to rotary field winding 18 which, in turn, may decrease current in the rotary field winding 18. This decrease in current to the rotary field winding 18 reduces the magnetic flux passing through the coils of the main output winding 13. The reduced magnetic flux generated by the rotary field winding 18 may be more easily canceled by magnetic flux that is generated by the current in the main output winding 13. Relatively less output current from the main output winding 13 is required to cancel reduced magnetic flux. Therefore, it may be desirable to maximize rotary field winding 18 current in order to provide sufficient current from the main output winding 13 in a short circuit condition.

When the alternator 11 operates in the short circuit condition, the voltage generated on the auxiliary winding 14 may be largely influenced by the pole pitch of the alternator 11. Pole pitch refers to a metric of mechanical placement of conducting coils relating to a circumferential area encompassed by each coil to a theoretical maximum circumferential area. In some systems, the pole pitch may be less than full pitch during the short circuit condition such that the canceling magnetic flux that is generated by the main output winding 13 may vary as the rotor revolves within each pole of the alternator 11. This varying of the canceling magnetic flux may cause a harmonic voltage to be generated in the auxiliary winding 14 with a frequency higher than that of the current in the main output winding 13. In some systems, the harmonic voltage that is generated within the auxiliary winding 14 may be comprised primarily of the third order harmonic. Other variations are possible, and other harmonic voltages, such as higher order voltages, may be generated.

In some alternators 11, the poly-phase auxiliary winding 14 may be a three-phase winding with separation between the windings at or near 120 electrical degrees. For example, at or near 120 electrical degrees of separation between the windings may refer to between 100 and 140 degrees of separation between the windings (among other ranges).

When there is a 120 degree phase separation on a three-phase alternator 11, the third order harmonic that is generated in the auxiliary winding 14 may result in no net line-to-line voltage on the auxiliary winding 14. No net line-to-line voltage refers to the voltage between any outputs of the auxiliary winding 14 being at or near zero due to subtraction of the voltage amplitudes. The no net line-to-line voltage on the auxiliary winding 14 may be due to the third order harmonic phase separation being near 360 degrees (i.e., 3 X 120 degrees).

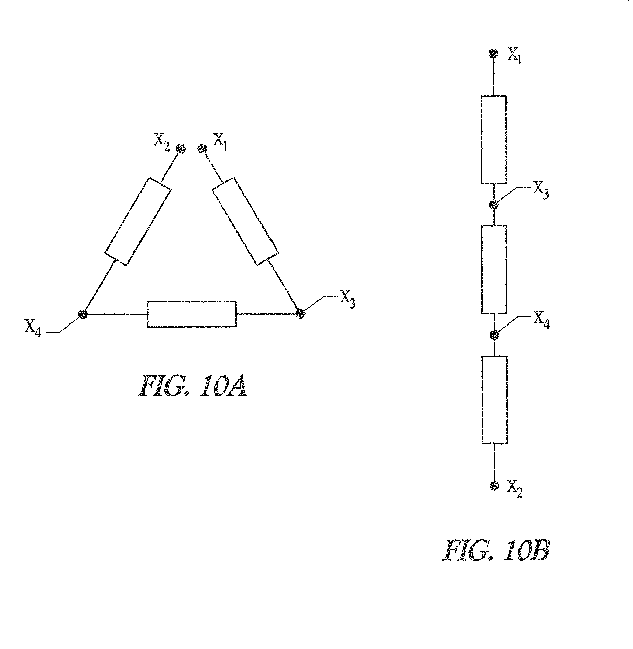

In some alternators 11, a single three-phase auxiliary winding 14 on a three-phase alternator 11 may provide a relatively small voltage to the exciter field winding 15 when configured in a delta or wye configuration. FIGS. 10A-10B illustrates an example form of the single three-phase auxiliary winding 14 for an alternator 11 in a corner open delta connection configuration. FIG. 10A illustrates an example form of an alternative connection diagram where the representations of the coil connections X1, X2, X3, X4 (connection X4 is an internal connection) are oriented according to a voltage phasor representation at a fundamental frequency.

FIG. 10B illustrates an example form of an alternative connection diagram where the representations of the coil connections X1, X2, X3, X4 (connection X4 is an internal connection) are oriented according to a voltage phasor representation at a third order harmonic frequency. The corner open delta connection configuration may permit full amplitude of the third order harmonic voltage that is generated in the three-phase auxiliary winding 14 to be provided to the exciter field winding 15. Full amplitude of the third order harmonic voltage that is generated in the three-phase auxiliary winding 14 may be provided to the exciter field winding 15 by connecting the auxiliary winding 14 as shown in FIG. 10. This connection configuration causes the third order harmonic voltages to be added together resulting in the voltage provided to the exciter field winding 15 at or near maximum amplitude.

In some systems, the single three-phase auxiliary winding 14 may be placed such that each phase of the three-phase auxiliary winding 14 may be at or near 120 fundamental electrical degrees apart. The connections of the three-phase auxiliary winding 14 may be configured such that there is at least one connection at or near 60 fundamental electrical degree phase separation between two of the three phases.

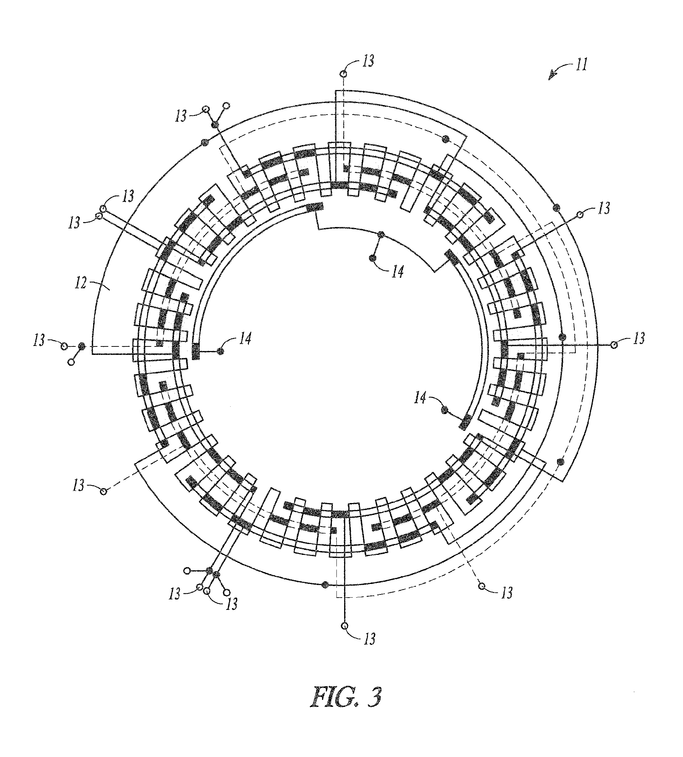

FIG. 1 shows where the poly-phase auxiliary winding 14 of the alternator 11 may include a single three-phase auxiliary winding. FIG. 3 shows where the poly-phase auxiliary winding of the stator includes a single two-phase auxiliary winding where the two phases are ninety fundamental electrical degrees apart. In other examples, the poly-phase auxiliary winding 14 may include a single four- (or greater-) phase auxiliary winding. In some systems, the alternator may include more than one poly-phase auxiliary winding 14.

In some example alternators 11, a pole pitch of the auxiliary winding 14 may be different than a pole pitch of the main output winding 13. In other example alternators 11, a pole pitch of the auxiliary winding 14 may be the same as a pole pitch of the main output winding 13. Other variations are possible.

Using a poly-phase auxiliary winding 14 in the alternator 11 that is configured to maximize the amplitude of the harmonic voltage available to the exciter field winding 15 may decrease voltage ripple to increase the voltage stability of rectified DC voltage sources within the voltage regulator 20. Using the poly-phase auxiliary winding 14 in the alternator 11 may also provide more uniform slot fill and/or cooling by equalizing coil placement in alternator 11 thereby potentially improving efficiency and/or reducing a size of the alternator 11.

An advantage of the poly-phase winding 14 is that it may provide sufficient energy to the exciter field winding 15 under an increased range of fault scenarios. As an example, a fault on a single phase of the main output winding 13 may only affect the single phase of the poly-phase winding 14 when that particular phase is short circuited.

In addition, the alternator 11 may provide faster voltage recovery during motor starting in a manner similar to the short circuit condition, especially when compared to single-phase auxiliary windings that may be used in many alternators. The alternator 11 may also provide lower total harmonic distortion when compared to other alternators that utilize single-phase auxiliary windings due to more equal magnetic loading from the uniformly distributed main output windings 13.

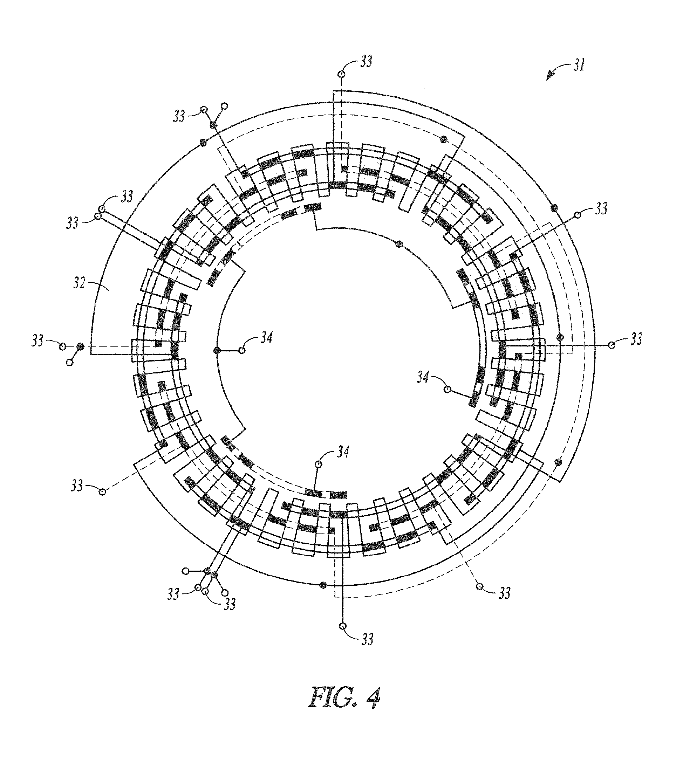

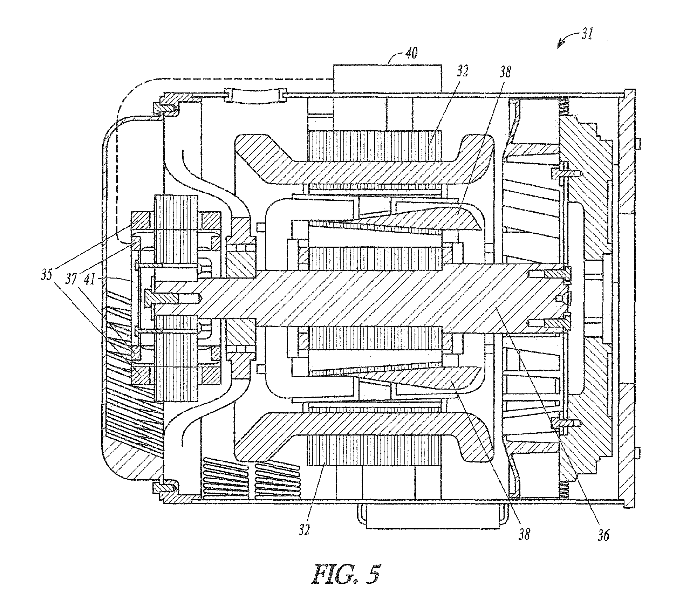

FIGS. 4-5 illustrate another example alternator 31 for a power generation system. The alternator 31 may include a stator 32. The stator 32 may include one or more of a main output winding 33, at least one auxiliary winding 34, and an exciter field winding 35 that may be powered by the auxiliary winding 34.

The alternator 31 may further include a rotor 36. The rotor 36 may include an exciter secondary winding 37 and a rotary field winding 38 that is powered by the exciter secondary winding 37. The rotary field winding 38 voltage may be determined by the exciter secondary winding 37 voltage. In some alternators 31, the rotary field winding 38 power may be determined by the exciter secondary winding 37 output. As an example, the rotary field winding 38 power may be provided by the exciter secondary winding 37 using uncontrolled rectifiers such as diodes or commutators (among other devices).

The alternator 31 may further include a regulator 40 that measures a current to the exciter field winding 35. The regulator 40 may control the current to a set point in order to regulate an output voltage produced by the main output winding 33 of the stator 32. A voltage regulator 42 may establish the current set point that is provided to the current controller 43. Voltage regulator 42 may establish a current set point based on an output characteristic of the alternator 11. Example output characteristics include (i) the output voltage of the alternator 11 (ii) the output current of the alternator 11 (among other output characteristics).

In some regulators 40, the regulator 40 may be part of a generator controller that controls operation of a prime mover that drives the rotor 36 of the alternator 31, such as an internal combustion engine.

In some power generation systems, the regulator 40 may receive a set point from an external device 41 to control the current to the exciter field winding 35. As examples, the set point may be received from the external device 41 by the regulator 40 using a pulse width modulated signal or digital communication.

The external device 41 may be mounted on an exterior casing of the alternator 31. In some power generation systems 30, the external device 41 may be located remotely from the alternator 31. As an example, the set point may be received from the external device 41 to the regulator 40 using a network (e.g., the Internet).

Some voltage regulators may control voltage applied to the rotary field winding 38. Increasing voltage across the rotary field winding 38 may cause the current flowing through the rotary field winding 38 to begin increasing. The output voltage of the main output winding 33 may be proportional to the current flowing through the rotary field winding 38. Therefore, a voltage applied to the rotary field winding 38 by some regulators may be indirectly linked to the output voltage of the main output winding 33 that the regulator is attempting to control.

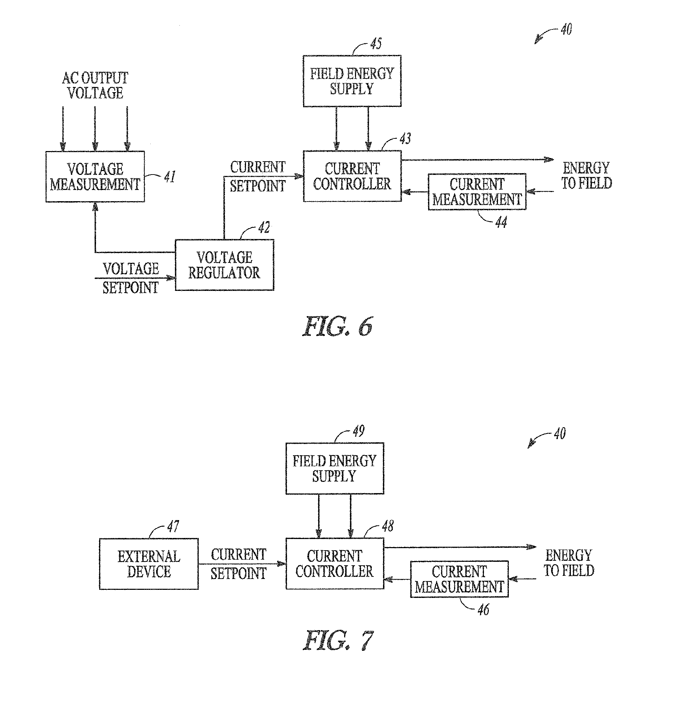

FIG. 6 shows an example of the regulator 40 that may be used to control the field excitation level of the alternator 31. The regulator 40 may include a voltage measurement module 41 that measures the output voltage of the main output winding 33. A voltage regulator 42 may be used to determine a current level in the rotary field winding 38 in order to provide an appropriate output voltage of the main output winding 33 with respect to a set point.

In some forms the voltage regulator 42 may determine a load level of the alternator 31. As an example, the load level may be determined by measuring the output current of the alternator 31 and the output voltage of the alternator 31. Other examples of determining the load level include measuring engine torque, temperature rise of alternator 11 and/or magnetic field intensity (among other characteristics). The voltage regulator 42 may determine a target field current level (i.e., a current set point) in the rotary field winding 38 based on the current field level in the rotary field winding 38 and the load level of the alternator 31.

The regulator 40 may include a current measurement module 44 that measures the current to the rotary field winding 38. The voltage regulator 42 may send a target current set point to the current controller 43. The current controller 43 may provide energy from a field energy supply 45 to the rotary field winding 38 when needed to control the current in the rotary field winding 38 to the target current set point.

FIG. 7 shows another example of the regulator 40 that may be used to control the field excitation level of the alternator 31. The regulator 40 may include a current measurement module 46 that measures the current to the rotary field winding 38. The external device 47 may send a target current set point to the current controller 48. The current controller 48 may provide energy from a field energy supply 49 to the rotary field winding 38 when needed to control the current in the rotary field winding 38 to the target current set point.

In some forms, the current controller 48 of the regulator 40 may remove energy from the rotary field winding 38, such as applying a negative voltage to the rotary field winding 38 by reversing the effective connection to the field energy supply 49. The removed energy may be stored in some form of energy storage device (e.g., a capacitor or battery) or dissipated in another device (e.g., a resistor or auxiliary winding 18).

Using a regulator 40 to control the current to a set point in order to regulate an output voltage produced by the main output winding 33 of the stator 32 may decrease cost associated with fabricating the alternator 31. The cost associated with fabricating the alternator 31 may be decreased because the alternator 31 may not require a permanent magnet to generate a magnetic field. As such, the alternator 31 may not require the rare earth materials (e.g. neodymium) that may otherwise be used with some permanent magnets.

In addition, using a current controlled regulator 40 may allow for full voltage drive to effectively eliminate the time constant of the exciter field winding 35 current and potentially match the transient loading response of a more costly permanent magnet excited alternator. The energy storage that is associated with the voltage drive may improve motor starting and/or permit increased alternator 11 current in the event of a short circuit.

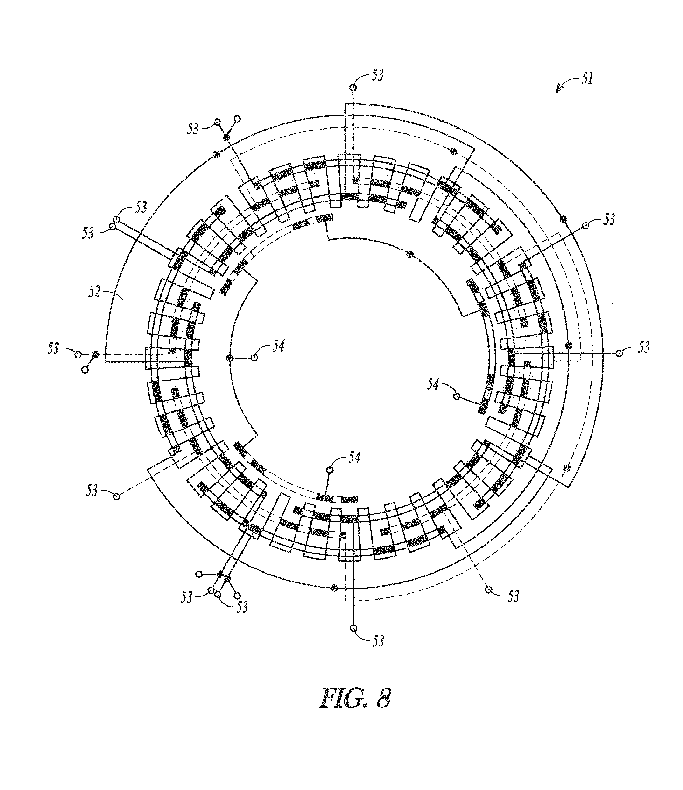

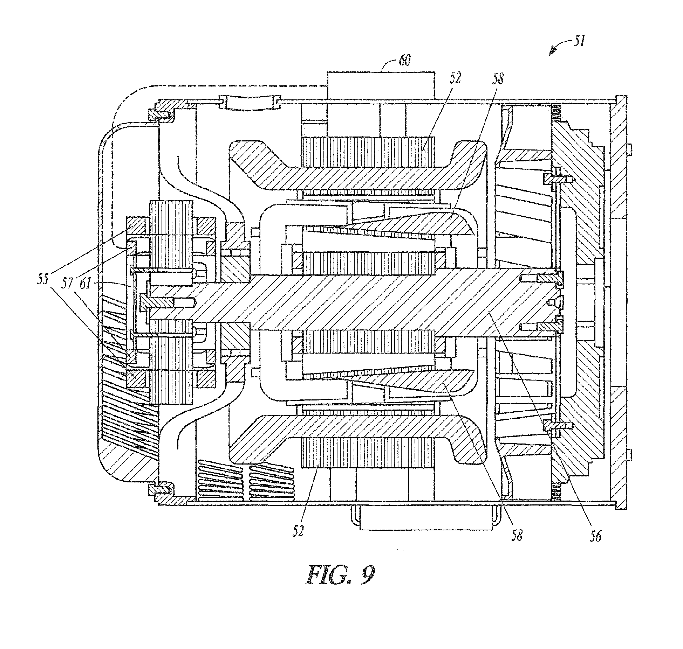

FIGS. 8-9 illustrate an example alternator 51 for a power generation system. The alternator 51 may include a stator 52. The stator 52 may include one or more of a main output winding 53, a poly-phase auxiliary winding 54, and an exciter field winding 55 that may be powered by the poly-phase auxiliary winding 54.

The alternator 51 may further include a rotor 56. The rotor 56 may include an exciter secondary winding 57 and a rotary field winding 58 that may be powered by the exciter secondary winding 57. The rotary field winding 58 voltage may be determined by the exciter secondary winding 57 voltage. In some power generation systems, the rotary field winding 58 current of the rotor 56 may be directly rectified from the exciter secondary winding 57 current by uncontrolled rectifiers.

The alternator 51 may further include a regulator 60. The regulator 60 may measure a current to the exciter field winding 55. The regulator 60 may control the current to a set point in order to regulate an output voltage produced by the main output winding 53 of the stator 52. The regulator 60 may be configured to effectively supplying energy derived from fundamental and higher order harmonic voltages (e.g. a third order harmonic voltage) to the rotary field winding 58. In some forms of the regulator 60, the regulator 60 may be part of a generator controller that controls operation of a prime mover that drives the rotor 56 of the alternator 51.

In some power generation systems, the poly-phase auxiliary winding 55 of the alternator 51 may be magnetically decoupled from the main output winding 53. Some poly-phase auxiliary windings 55 of the alternator 51 may include a (i) single three-phase auxiliary winding configured to maximize harmonic energy that is provided to the exciter field winding 55; or (ii) a single two-phase auxiliary winding where the two phases are ninety electrical degrees apart. Other variations are possible.

In some power generation systems, the regulator 60 may receive a set point from an external device 61 to control the current to the exciter field winding 55. As examples, the set point may be received by the regulator 60 from the external device 61 using a pulse width modulated signal or digital communication.

The external device 61 may be mounted on an exterior casing of the alternator 61. In some power generation systems 60, the external device 61 may be located remotely from the alternator 61. As an example, the set point may be received by the regulator 60 from the external device 61 using a network (e.g., the Internet).

Thus, example alternators for a power generation system are described herein. Although the present invention has been described with reference to specific examples, it will be evident that various modifications and changes may be made to these examples without departing from the broader spirit and scope of the invention. Accordingly, the specification and drawings are to be regarded in an illustrative rather than a restrictive sense.

The Abstract is provided to comply with 37 C.F.R. Section 1.72(b) requiring an abstract that will allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

The present invention can also be described by means of the following clauses:
1. An alternator for a power generation system, the alternator comprising:
   a stator that includes a main output winding, a poly-phase auxiliary winding, and an exciter field winding powered by the poly-phase auxiliary winding, wherein the poly-phase auxiliary winding is magnetically decoupled from the main output winding;
   a rotor that includes an exciter secondary winding and a rotary field winding powered by the exciter secondary winding; and
   a regulator that measures a current to the exciter field winding and controls the current to a set point in order to regulate an output voltage produced by the main output winding of the stator.
2. The alternator of clause 1, wherein the poly-phase auxiliary winding of the stator includes a single three-phase auxiliary winding.
3. The alternator of clause 1, wherein the regulator is configured to derive energy from fundamental and higher order harmonic voltages.
4. The alternator of clause 1, wherein the regulator receives a set point from an external device to control the current to the exciter field winding.
5. The alternator of clause 4, wherein the set point is received from the external device using digital communication.
6. The alternator of clause 1, wherein the regulator is part of a generator controller that controls operation of a prime mover that drives the rotor of the alternator.
7. An alternator for a power generation system, the alternator comprising:
   a stator that includes a main output winding, an exciter field winding, and a poly-phase auxiliary winding configured to provide energy to the exciter field winding, wherein the poly-phase auxiliary winding is configured to provide maximum amplitude of a harmonic voltage to the exciter field winding;
   a rotor that includes an exciter secondary winding and a rotary field winding powered by the exciter secondary winding, wherein a rotary field winding current is determined by an exciter secondary winding current; and
   a regulator that controls the energy provided to the exciter field winding of the stator to regulate an output voltage produced by the main output winding of the stator.
8. The alternator of clause 7, wherein a pole pitch of the poly-phase auxiliary winding is different than a pole pitch of the main output winding.
9. The alternator of clause 7, wherein the rotary field winding current is directly rectified from the exciter secondary winding current by uncontrolled rectifiers.
10. The alternator of clause 7, wherein the poly-phase auxiliary winding of the stator includes a single three-phase auxiliary winding.
11. The alternator of clause 10, wherein each phase of the three-phase auxiliary winding is at or near 120 fundamental electrical degrees apart, wherein connections of the three-phase auxiliary winding are configured such that there is a phase separation between at least two of the three phases of at or near 60 fundamental electrical degrees.
12. The alternator of clause 7, wherein the poly-phase auxiliary winding of the stator includes a single auxiliary winding having two phases, wherein the two phases are at or near 90 electrical degrees apart.
13. The alternator of clause 7, wherein the harmonic voltage is a third order harmonic voltage.
14. An alternator for a power generation system, the alternator comprising:
   a stator that includes a main output winding, at least one auxiliary winding and an exciter field winding powered by the auxiliary winding;
   a rotor that includes an exciter secondary winding and a rotary field winding powered by the exciter secondary winding; and
   a regulator that measures a current to the exciter field winding and controls the current to a set point in order to regulate an output voltage produced by the main output winding of the stator.
15. The alternator of clause 14, wherein power of the rotary field winding is determined by the exciter secondary winding output.
16. The alternator of clause 14, wherein the power of the rotary field winding is provided by the exciter secondary winding using uncontrolled rectifiers.
17. The alternator of clause 14, wherein the regulator receives a set point from an external device to control the current to the exciter field winding.
18. The alternator of clause 17, wherein the set point is received from the external device using a pulse width modulated signal.
19. The alternator of clause 17, wherein the set point is received from the external device using digital communication.
20. The alternator of clause 17, wherein the external device is mounted on an exterior casing of the alternator.

## Claims

1. An alternator for a power generation system, the alternator comprising:
a stator that includes a main output winding, a poly-phase auxiliary winding, and an exciter field winding powered by the poly-phase auxiliary winding, wherein the poly-phase auxiliary winding is magnetically decoupled from the main output winding;
a rotor that includes an exciter secondary winding and a rotary field winding powered by the exciter secondary winding; and
a regulator that measures a current to the exciter field winding and controls the current to a set point in order to regulate an output voltage produced by the main output winding of the stator.

2. The alternator of claim 1, wherein the poly-phase auxiliary winding of the stator includes a single three-phase auxiliary winding.

3. The alternator of claim 1 or 2, wherein the regulator is configured to derive energy from fundamental and higher order harmonic voltages.

4. The alternator of any of claims 1-3, wherein the regulator receives a set point from an external device to control the current to the exciter field winding.

5. The alternator of any of claims 1-4, wherein the regulator is part of a generator controller that controls operation of a prime mover that drives the rotor of the alternator.

6. An alternator for a power generation system, the alternator comprising:
a stator that includes a main output winding, an exciter field winding, and a poly-phase auxiliary winding configured to provide energy to the exciter field winding, wherein the poly-phase auxiliary winding is configured to provide maximum amplitude of a harmonic voltage to the exciter field winding;
a rotor that includes an exciter secondary winding and a rotary field winding powered by the exciter secondary winding, wherein a rotary field winding current is determined by an exciter secondary winding current; and
a regulator that controls the energy provided to the exciter field winding of the stator to regulate an output voltage produced by the main output winding of the stator.

7. The alternator of claim 6, wherein a pole pitch of the poly-phase auxiliary winding is different than a pole pitch of the main output winding.

8. The alternator of claims 6 or 7, wherein the rotary field winding current is directly rectified from the exciter secondary winding current by uncontrolled rectifiers.

9. The alternator of claim 6, wherein the poly-phase auxiliary winding of the stator includes a single three-phase auxiliary winding; and
wherein each phase of the three-phase auxiliary winding is at or near 120 fundamental electrical degrees apart, wherein connections of the three-phase auxiliary winding are configured such that there is a phase separation between at least two of the three phases of at or near 60 fundamental electrical degrees.

10. The alternator of claim 6, wherein the poly-phase auxiliary winding of the stator includes a single auxiliary winding having two phases, wherein the two phases are at or near 90 electrical degrees apart.

11. The alternator of any of claims 6-10, wherein the harmonic voltage is a third order harmonic voltage.

12. An alternator for a power generation system, the alternator comprising:
a stator that includes a main output winding, at least one auxiliary winding and an exciter field winding powered by the auxiliary winding;
a rotor that includes an exciter secondary winding and a rotary field winding powered by the exciter secondary winding; and
a regulator that measures a current to the exciter field winding and controls the current to a set point in order to regulate an output voltage produced by the main output winding of the stator.

13. The alternator of claim 12, wherein power of the rotary field winding is determined by the exciter secondary winding output.

14. The alternator of claim 12, wherein the power of the rotary field winding is provided by the exciter secondary winding using uncontrolled rectifiers.

15. The alternator of any of claims 12-14, wherein the regulator receives a set point from an external device using either a pulse width modulated signal or digital communication to control the current to the exciter field winding.
